# EUROPEAN PATENT SPECIFICATION

(11) **EP 0 372 411 B1**
(45) Date of publication and mention of the grant of the patent: **03.07.1996**
(21) Application number: 89122195.4
(22) Date of filing: 01.12.1989
(51) Int. Cl.: G06F 11/00, G06F 11/22

(54) **Floating console control system**
Schwebendes Konsolesteuerungssystem
Système de commande de console flottant

(30) Priority: 02.12.1988 JP 306343/88
(43) Date of publication of application: 13.06.1990
(73) Proprietor: FUJITSU LIMITED, Kawasaki-shi, Kanagawa 211 (JP)
(72) Inventor: Nagahara, Toyokazu c/o FUJITSU LIMITED, Kawasaki-shi Kanagawa 211 (JP)
(74) Representative: Sunderland, James Harry

(56) References cited:
- EP-A- 0 031 782
- DE-A- 2 350 371
- PATENT ABSTRACTS OF JAPAN vol. 10, no. 80 (P-441)March 29, 1986 & JP-A- 60 217 436
- PATENT ABSTRACTS OF JAPAN vol. 9, no. 40 (P-336)October 13, 1984 & JP-A-59 180 734
- PATENT ABSTRACTS OF JAPAN vol. 4, no. 138 (P-29)July 3, 1980 & JP-A-55 088 157
- PATENT ABSTRACTS OF JAPAN vol. 12, no. 298 (P-744)August 15, 1988 & JP-A- 63 070 346
- PATENT ABSTRACTS OF JAPAN vol. 12, no. 366 (P-765)September 30, 1988 & JP-A- 63 115 241

## Description

The present invention relates to the changeover of console terminal of a service processor for fault detection and recovery, and initial program loading of an information processing unit.

A computer system comprising a central processing unit, a main storage unit, a main storage control unit, for making access to the main storage unit, and a channel unit for controlling input and output, has been used for information processing and scientific calculation, etc.

A supercomputer to be installed in offices (in an office environment) is connected with a service processor (hereinafter abbreviated to SVP). As described in the Japanese patents with Laid-open Nos. 55-88157, 59-173815, 59-180734, the service processor effects fault detection and recovery of the central processing unit, main storage unit and main storage control unit, for example, and follows the history of instruction processing. Moreover, and importantly, the service processor effects initial program loading. Initial program loading means the loading of necessary programs before the computer starts operational processing, but if the computer generates a system-down state due to a fault, it continues that processing.

The service processor SVP is connected with a terminal unit, called a console, for executing the intrinsic processing functions thereof, so-called, and an operator is able to input processing commands from this console. Moreover, an operating system (OS) stored in the main storage unit is transferred to the central processing unit (CPU) and thereby predetermined processing are executed by the computer system. An OS message is sometimes output to the SVP from this operating system (OS). Such operation is carried out by outputting the current condition of the computer system to the SVP.

In addition, the SVP is sometimes connected with a plurality of work stations. An interface line is connected to the SVP through a channel unit interface and an output of an application program of the computer system is output to a work station WS through the SVP. Moreover, it is possible to input determined or selected data and commands to the application program from the WS.

It is assumed here, merely by way of example, that 16 units (terminal units) are connected to the SVP. A particular one of these is used for executing the intrinsic processing functions of the SVP (fault detection and recovery, initial program loading, as mentioned previously). The remaining 15 terminal units are used as work stations for executing processing relating to application programs. Therefore, the SVP is connected with an interface (signal line connected directly to CPU, main storage unit and main storage control unit, etc.) for intrinsic processing functions and a signal line for output of data of application programs to display screen to provide for the input of commands concerning the application programs of the computer system.

With a plurality of terminals connected to the SVP, the terminal(s) for executing the intrinsic processing functions of the SVP (SVP terminal(s)) and the terminal(s) for applications programs (WS terminal(s)) are previously determined or selected in advance.

The terminals of the total of 16 terminals may be called terminal No. 1 to terminal No. 16. Of these terminals, terminal No. 1 is, for example, determined to be the SVP terminal whilst the terminals from No. 2 to No. 16 are determined to be the WS terminals, and this disposition of terminals cannot be changed. Namely, when data is to be transferred to terminal No. 1 or to terminal No. 16 from the CPU of the computer system, data is transferred together with the information designating the distant terminal number. Each function of a terminal is previously stored in a program stored in the main storage unit.

Therefore, alteration of terminal functions is impossible unless this stored program is updated. Usually, the necessary program is loaded before starting of the computer system. This is initial program loading as mentioned previously. First, a nucleus initial program is loaded and it is stored therein that terminal No. 1, for example, is the SVP terminal. Accordingly, determination of which terminal is the SVP terminal is already made before the computer system is started.

If a hardware fault (for example, display screen, CRT or LCD fails and display becomes impossible, a keyboard fails or a microprocessor forming a terminal fails) occurs in the SVP terminal during operation of computer system, the intrinsic processing functions of the SVP can no longer be continued. For instance, when CPU failure means that it must be started again, namely when initial program loading must be effected, if the SVP terminal is defective, the processing cannot be executed thereafter by the computer system.

The SVP terminal(s) is or are often installed in an area wherein the main frame of the computer system is also installed. In the case of offices or laboratories, a computer room is provided and CPU, main storage unit, main storage control unit, channel unit and SVP are installed therein. The SVP terminal(s) is or are installed in the computer room. The WS terminals connected to the SVP are installed in offices and/or laboratories for use by operators. In general, the computer room is physically separated from the offices and/or laboratories. Therefore, when an operator recognises a system-down state of the computer during use of a WS terminal, he must go to the computer room and effect initial program loading by operating the or a SVP terminal. Namely, the operator must go to the computer room from his current position, and thereby initial program load is delayed.

Recently, computer systems deal with processing including recording, calculation and simulation of changes of stock prices. Stock prices may change from second to second. If initial program loading is delayed, it is no longer possible to correctly continue the processing which were being carried out. Such uses of computer systems are not limited only to stock prices. Similar considerations arise with computer systems dealing with other data which changes with time, such as weather data or data transmitted from artificial satellites.

A similar problem to that mentioned above occurs if the SVP terminal fails when the computer system fails and restarting has to be effected, i.e. when the initial program loading has to be carried out.

Usually the same type of terminal, so far as the terminal hardware is concerned, is used for both the SVP and WS terminals. The Japanese patent with Laid-open No. 59-173815, "Console Work Station Change-over System" discloses a structure in which an interface of a work station is connected with an interface of a SVP with a connecting line, a switch is provided between these interfaces and the terminals are connected to this switch. These terminals can be changed over to provide either a work station terminal or an SVP terminal using the switch. However, such switching is provided based on a computer system different from a system as described above. Namely, the interface of the SVP is so structured as to allow connection of one SVP terminal from the beginning, an interface solely for a work station is provided separately and such interface is switched for one terminal with a physical switch. However, in this method, when a terminal is used as the work station, the SVP terminal does not exist. Therefore, a particular one terminal can be switched so that it provides (acts as) a WS terminal or a SVP terminal, but it is impossible to freely select which one of a plurality of terminals is the SVP terminal. If it is required to provide switching in relation to a plurality of terminals, this can be done by providing a plurality of switches but the amount of hardware involved increases substantially. This is a bottleneck for realisation of a low-cost computer system. In this case, the SVP terminal is not recognised on the CPU side. That is, information indicating which terminal is the SVP terminal is not stored in the main storage unit. Therefore, if an operator changes over the switch when the CPU has commenced transfer of data to SVP or WS, the data transfer cannot be carried out correctly.

The Japanese patent of Laid-open No. 59-180734 entitled "Common Use of System Console and Work Station" discloses the switching of a particular unit for use as a SVP terminal or as a WS terminal, among a plurality of terminals connected to an SVP. This technique provides that an indication of which terminal is the SVP terminal is stored in a main storage unit but also that the SVP terminal can be used as a WS terminal. Namely, a particular terminal unit can be used as SVP terminal or WS terminal through a switching operation, but other terminals can be used only as WS terminals.

Patent Abstracts of Japan, Vol. 10, No. 80, (p-441), March 1986, and JP-A-60 217 436 discloses a console work station control system in which, after a fault takes place while terminals are in operation as WS terminals and an error display is shown on a panel (associated with the host processor), an operator can input an SVP START command which is received by the service processor. The mode of the service processor is consequently switched to console mode and the terminals are thereupon switched to console mode.

According to the present invention there is provided a computer system, comprising:-
a main storage unit for storing at least an operating system,
a central processing unit for reading instructions of a program stored in said main storage unit and executing predetermined processings and calculations, and
a service processor having connected thereto a plurality of terminals to which respective terminal identifiers, for example terminal numbers, are assigned, operable to use any terminal from among the said plurality of terminals as the service processor terminal or console and to use the remaining terminals for application program processes, for example as work stations, and being connected at least to said main storage unit and central processing unit for loading the said program into the main storage unit.

An embodiment of the present invention can provide a computer system comprising a main storage unit, for storing at least an operating system, a central processing unit, for reading instructions of a program stored in the main storage unit and executing predetermined processing and calculations, a service processor connected at least to the main storage unit and central processing unit and capable of loading programs to the main storage unit, a plurality of terminals which are given previously assigned numbers and are connected with the service processor, a means for storing that a request has been input corresponding to a terminal when a request for connection as the SVP (service processor) terminal is issued from the terminal, a means for loading a predetermined program to load the operating system into the main storage unit, and a means for storing the terminal number which has issued the connection request to the predetermined program after the predetermined program is loaded.

An embodiment of the present invention can provide that any desired one of the plurality of terminals can be employed as the SVP terminal or console.

Reference is made, by way of example, to the accompanying drawings, in which:-
Fig. 1 is a block diagram of a computer system in accordance with an embodiment of the present invention,
Fig. 2 is a block diagram illustrating programs stored in the memory (MEM) of the SVP shown in Fig. 1.
Fig. 3, composed of Figs. 3a and 3b, is a diagram for assistance in explaining processing sequence of programs shown in Fig. 2.
Fig. 4 is a diagram illustrating display format of an output from a frame program.
Fig. 5 is a diagram illustrating the format of a NIP (nucleus initialisation program),
Fig. 6 is a diagram illustrating the format of a device control table.

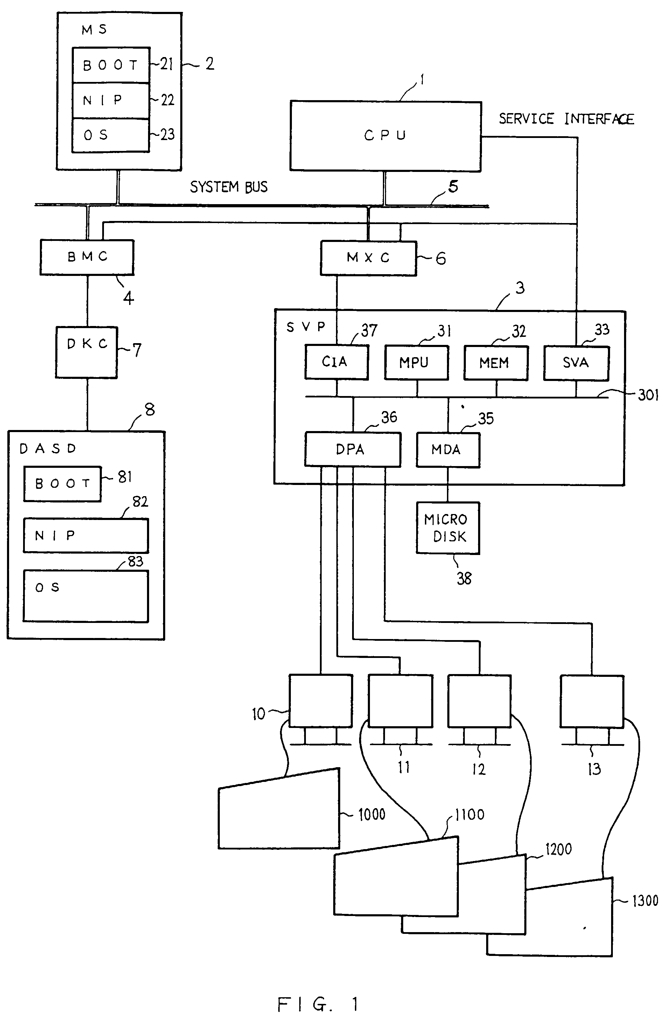

A computer system shown in Fig. 1 as an example of a system in accordance with an embodiment of the present invention has a structure in which a central processing unit (CPU) 1, a main storage unit (MS) 2, a block multiplexer channel (BMC) 4, and a multiplexer channel (MXC) 6 are connected through a system bus 5. The main storage unit (MS) 2 stores programs required for the computer system to execute processing, including an operating system OS and application programs which operate in conformity with the commands of the OS. CPU 1 reads instructions of programs, and data, stored in MS 2, for performing calculations. BMC 4 transfers data stored in MS 2 to controllable input/output units connected to BMC 4 in accordance with input/output instructions of CPU 1. Such input/output units include a DASD (direct access storage device) 8. A disk controller (DKC) 7 is provided between BMC 4 and DASD 8 for controlling data writing and reading. DASD 8 is usually provided by a hard disk.

MXC 6 is also connected with a controllable service processor (SVP) 3, a communication control unit, printer and work stations, etc.

In the SVP 3, MPU 31, memory 32, CIA (channel interface adapter) 37, SVA (service interface adapter) 33, DPA (display interface adapter) 36, and MDA (micro disk interface adapter) 35 are connected through a bus 301.

SVA 33 provides an interface between CPU 1, BMC 4, MXC 6 and SVP 3 and is connected thereto by a connecting line for collecting fault data.

CIA 37 is an interface between multiplexer channel MXC 6 and SVP 3. CPU 1 outputs commands or data to work stations among terminals 10 to 13 (to those terminals which are work stations) connected to SVP 3. Moreover, data is also transferred in the reverse direction, to CPU 1, from the work stations among the terminals 10 to 13. Each terminal affords a keyboard, 1000, 1100, 1200 or 1300.

MDA (micro disk interface adapter) 35 provides an interface between a micro disk 38 and SVP 3.

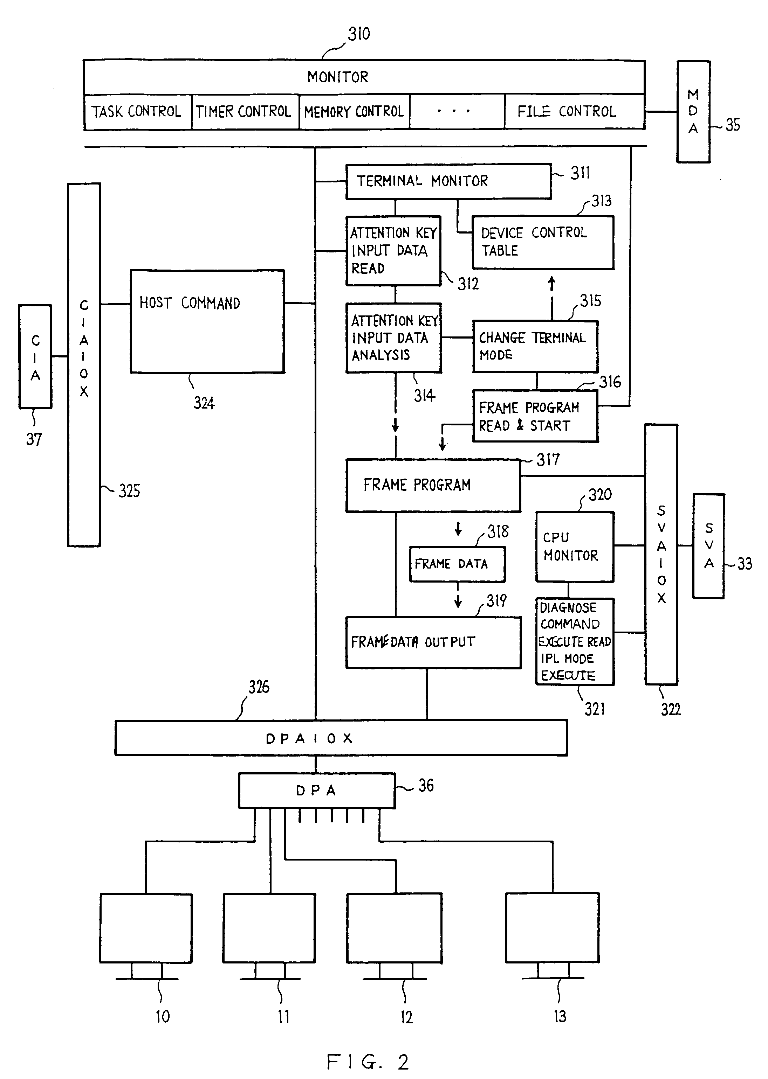

MPU 31 reads a program stored in memory 32 of SVP 3 and executes processing as SVP 3. Programs as illustrated in Fig. 2 are stored in the memory 32. In Fig. 2, 310 is a monitor program for task management, timer management, memory management and file management. 311 is a terminal monitor program for monitoring whether or not commands or data are output to SVP 3 from terminals 10 to 13. More concretely, polling may be effected for this purpose. 312 is an attention key, input data read program. 314 is an attention key, input data analysis program; 315 is a change terminal mode program; 316 is a frame program read and start program; 317 is a frame program; 318 is frame data; 319 is a frame data output program; 320 is a CPU monitor program and 321 is a diagnose command execution and read IPL mode execution program. CIAIOX 325, SVAIOX 322, DPAIOX 326 are programs for managing CIA 317, SVA 33 and DPA 36 respectively.

Operations of these programs will be explained below.

Here, it is assumed that the computer system shown in Fig. 1 has generated a system-down indication due to a program error in the main storage unit.

In this case, initial program loading must be effected from that one of the terminals 10 to 13 connected to SVP 3 which is the SVP terminal. Here, it is assumed that the terminal 13 is designated as the SVP terminal and is installed in a computer room. It is also assumed that the other terminals are designated as WS terminals and that a user of a WS terminal desires to effect initial program loading immediately.

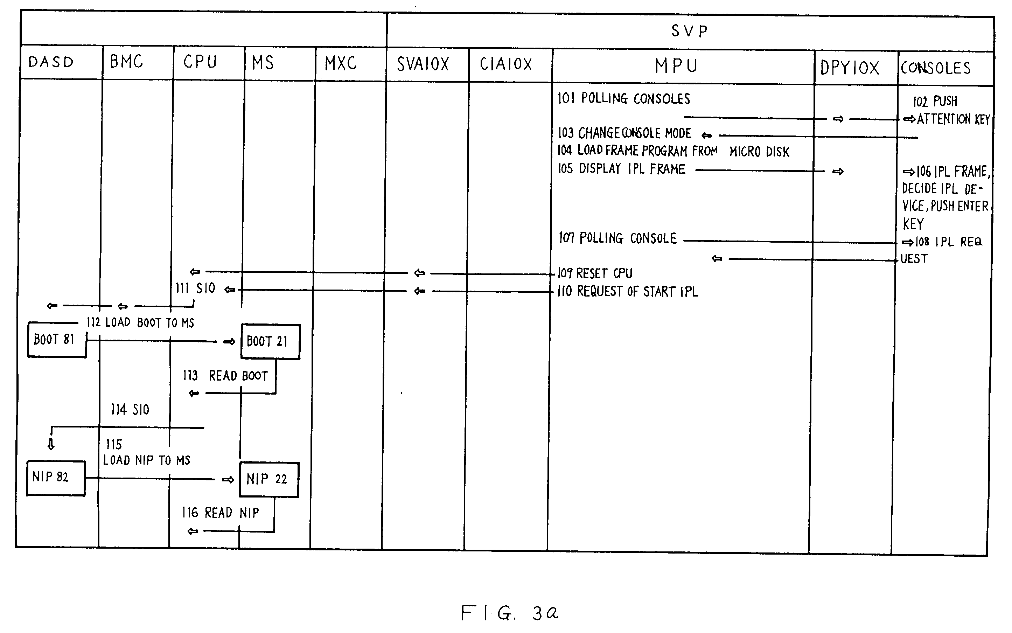

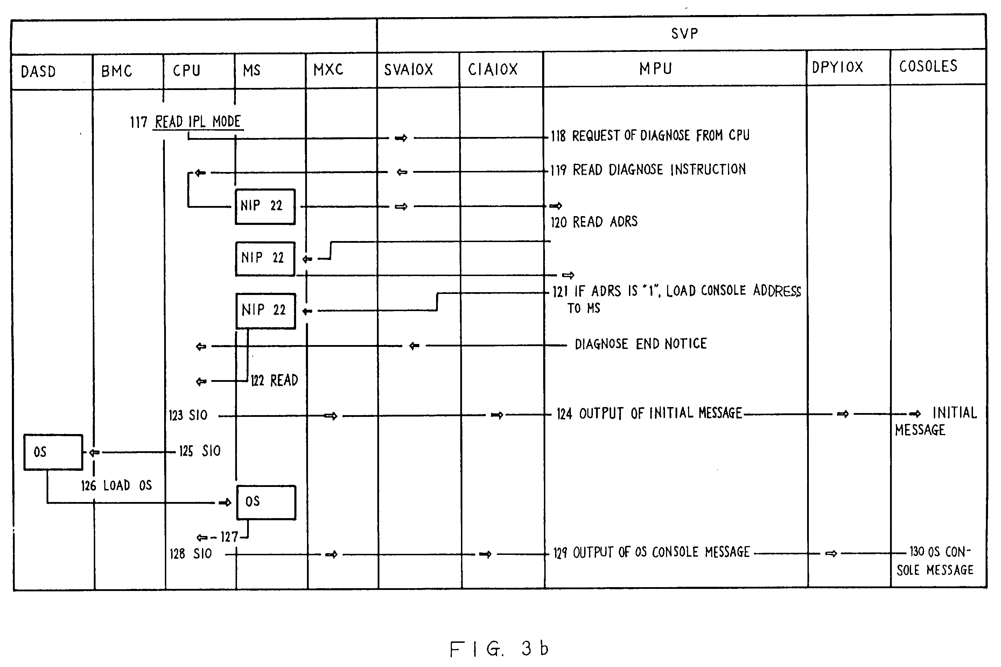

### Step 101 (the step numbers correspond to numbers given in Fig. 3):

The terminal monitor program 311 in the memory of SVP 3 carries out polling of the terminals 10 to 13.

### Step 102:

It is assumed that an operator has pressed the attention key of the keyboard at terminal 10 (one of terminals 10 to 13) connected to the SVP 3.

When such attention key is depressed, it is determined by the attention key input data read program 312 that a key (any key) has been depressed.

The attention key input data analysis program 314 determines that the key depressed is an attention key and CPU 1 generates a system-down and the terminal 10 is switched to act as a SVP terminal instead of a WS terminal.

### Step 103:

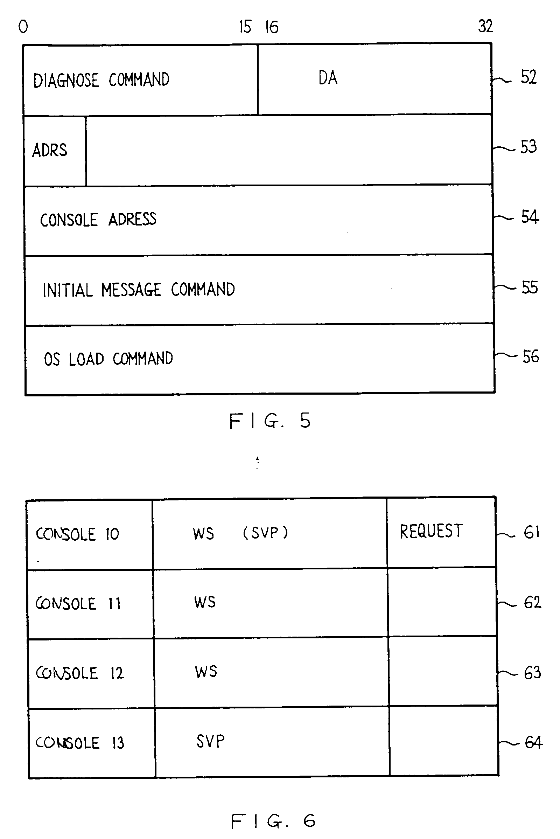

The change terminal mode program 315 changes a request mode indication stored in a device control table 313 (c.f. Fig. 2). Namely, it stores an indication that the terminal 10 has issued a change terminal request. Fig. 6 shows a device control table. The numbers given on the left side indicate terminal numbers, to the right of which are indications of the purpose for which the relevant terminal is used (WS or SVP terminal). For terminal 10 the indication shows that it is currently used as a WS. The letters SVP in parentheses indicate that this indication can be rewritten (in the step 120 as described later). It suggests that the terminal is used as the WS terminal in the current step 103. The numerals 61 to 64 indicate the table portions storing information as to whether a change terminal request has been issued or not. These numerals correspond to terminal numbers and in this case, a change terminal request has been issued in respect of 10.

### Step 104:

The frame program read and start program 316 loads the frame program 317, which is the frame stored on the micro disk 38 for executing initial program loading output to the SVP terminal, to the memory 32 from such micro disk 38. In Fig. 3, 317 is the frame program and it is stored into the memory 32 from the micro disk 38 at this timing.

### Step 105:

The frame data output program 319 transfers the frame data 318 of the frame program 317 to DPAIOX 326 (a program for managing input/output processings of DPA) and outputs it to the terminal 10.

### Step 106:

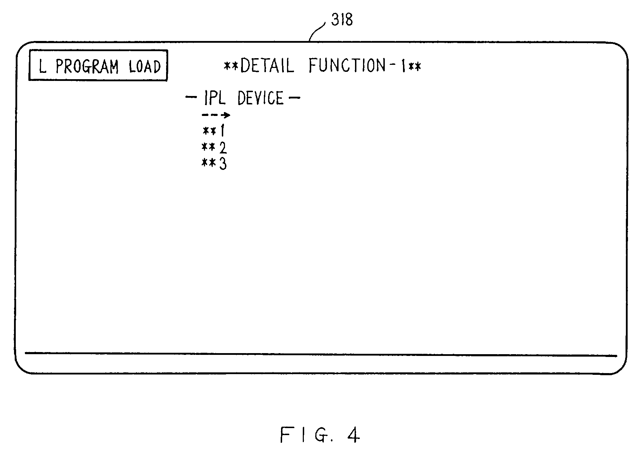

Frame data 318 of Fig. 4 is output to the terminal 10. When such frame is displayed on the terminal 10, the IPL device is designated. IPL device designation means the number of the external memory unit storing the program to be loaded to the main storage unit 2. Here, DASD 8 is designated. The numbers such as 1, 2, 3 are selected on the frame data 318 and designated when an operator inputs such numbers. These numbers are assigned in correspondence to the predetermined input/output units. The number 1 designates DASD 8, whilst 2 and 3 designate other input/output units which are connected to BMC 4 as controllable units. An operator designates DASD 8 on the frame data 318 and then depresses the execution key.

### Step 107:

The terminal monitor program 311 in the memory 32 of SVP 3 carries out polling of the WS terminals 10 to 13.

### Step 108:

When the execution key is depressed, the attention key, input data read program 312 decides that a key has been depressed. The input data analysis program 314 decides that the data transferred is the IPL device number, also decides that the terminal 10 has designated DASD 8 for the IPL device and transfers such number to the frame program 317.

### Step 109:

The frame program 317 resets CPU 1 from SVA 33 through the SVAIOX program 322.

### Step 110:

The IPL start request is issued to CPU 1. The frame program 317 notifies the IPL device number to CPU 1 from SVA 33 through the SVAIOX program 322.

### Step 111:

Upon reception of such request and IPL device number, CPU 1 outputs the input/output start instruction to DASD 8 together with such IPL device number through the block multiplexer channel BMC 4. The input/output start instruction is automatically generated by a microprogram which executes START IPL processing in CPU 1.

### Step 112:

Upon reception of the input/output start instruction, DASD 8 loads a bootstrap program 81 to the main storage unit 2. The bootstrap program 81 is necessary for CPU 1 to read the data stored in the main storage unit 2 for data transfer. In this case, this bootstrap program 81 is loaded in order to successively load the operating system OS and application program because the data transfer cannot be executed due to system-down of the computer system.

### Step 113:

CPU 1 reads bootstrap program 21 in the main storage unit 2.

### Step 114:

The input/output instruction for loading the data in DASD 8 designated by the bootstrap program 21 to the determined address of the main storage unit 2 is issued to DASD 8. In this case, data means NIP (nucleus initialisation program) 82.

### Step 115:

NIP 82 is loaded to the main storage unit 2. The format of NIP 82 is shown in Fig. 5.

### Step 116:

When NIP 82 is loaded to the main storage unit 2, CPU 1 reads NIP 22 and executes instructions of the NIP (Fig. 5).

### Step 117:

When CPU 1 recognises that the instruction executed is a read IPL diagnose instruction 52 (Fig. 5), it asks SVP 3 to read the diagnose instruction 52 (Fig. 5) in NIP 22. This request is transferred to SVP 3 through SVA 33 and SVAIOX 322.

### Step 118:

The CPU monitor program 320 of SVP 3 recognises that the request is issued and notifies it to diagnose command execution program 221.

### Step 119:

The diagnose command execution program 321 of SVP 3 reads the diagnose instruction 52 of NIP 22 from the main storage unit 2 through SVAIOX 322 and SVA 33.

### Step 120:

The diagnose instruction 52 is shown in Fig. 5. Bits 0 to 15 indicate the diagnose instruction 52. DA is a leading address on the main storage unit 2 storing ADRS and terminal number in NIP. Upon reading the diagnose instruction 52, the diagnose command execution program 321 reads the data address, namely ADRS, designated by DA. When the bit of ADRS is 0, the terminal number stored previously in NIP 82 is assigned to the SVP terminal (indicates the SVP terminal).

Namely, ADRS 53 is preset by an operator and stored in DASD 8. When it is 0, the SVP terminal is fixed. For instance, when ADRS 53 is 0 and the terminal number 54 stored in NIP 82 is 13, the terminal No. 13 is directly used thereafter as the SVP terminal. When ADRS is 1, if the terminal number stored in NIP 82 is 13, this terminal is not used as the SVP terminal. When the bit is assumed to be 1, the device control table 313 (Fig. 6) in the memory 32 of SVP 3 is read and the terminal number for which a selection request is stored in the terminal request mode is also read.

In this case, the terminal number 10 (as stored in Step 104) is read. Simultaneously, the terminal mode of terminal 10 is updated to the SVP terminal mode, invalidating the mode of terminal 13.

### Step 121:

The terminal number 10 is stored in the address designated by DA+1 of the diagnose instruction (namely, 54 in NIP). Namely, the terminal number 10 is stored in the address of NIP 22 previously storing the terminal number 13. Therefore, the terminal number 10 is stored as the SVP terminal in the main storage unit 2. The CPU monitor program 320 in SVP 3 notifies completion of read IPL mode diagnose instruction in Step 117 of CPU 1 to CPU 1.

### Step 122:

After the terminal number is stored, CPU 1 reads the initial message issuing instruction 55 from NIP 82.

### Step 123:

CPU 1 notifies the initial message issuing instruction 55 (this instruction informs an operator of starting of loading of OS) to a host command program 324 of SVP 3 through the multiplexer channel 6 and CIA 37 of SVP 3.

### Step 124:

The host command program 324 analyses the instruction and decides that the instruction is destined for terminal 10 and transfers it to DPAIOX 326. DPAIOX 326 displays a message to terminal No. 10 through DPA 36.

### Step 125:

CPU 1 issues to DASD 8 OS load instruction 56 (stored in NIP 22) for loading operating system 83 to the main storage unit 2. The OS load instruction 56 stores the leading address of OS stored in DASD 8.

### Step 126:

DASD 8 transfers the operating system 83 to the main storage unit 2 from the address designated by the instruction described above.

### Step 127:

When the operating system 83 is loaded to the main memory, CPU 1 reads the input/output instruction for the operating system message stored in the operating system 83.

### Step 128:

The input/output instruction for operating system message (this instruction indicates that the operating system is stored in the main storage unit 2 to the SVP terminal 10 and moreover sequentially notifies the executing condition of OS to an operator) to the host command program 324 of SVP 3 through the multiplexer channel and CIA 37 of SVP 3.

### Step 129:

The host command program 234 analyses the operating system message instruction, decides that it is destined for the terminal 10 and transfers it to DPAIOX 326.

### Step 130:

DPAIOX 326 displays the message to the terminal No. 10 through DPA 36.

Operating and structure for storing the SVP terminal number to the main storage unit 2 during the initial program loading have been described. In this explanation, the terminal number of the SVP terminal is decided to be No. 10 but the SVP terminal number is not limited to No. 10; it can be selected to be any number desired.

An embodiment of the present invention relates to a floating console system for a computer system. This computer system comprises a main storage unit for storing the operating system, a central processing unit for reading instructions of a program stored in the main storage unit and executing programmed processing and calculations, and a service processor connected at least to the main storage unit and central processing unit to load the program to the main storage unit. The service processor is connected with a plurality of terminals to which particular numbers are assigned and stores, at a timing when the operating system is to be loaded into the main storage unit, an indication that a connection request (a request for connection as an SVP terminal) has been input, when such a request is issued from amongst the plurality of terminals, in correspondence to the requesting terminal. Thereafter, when a predetermined program for loading the operating system to the main storage unit is loaded, the number of the terminal which issued the connection request is stored in the program. Thereafter such predetermined program loads the operating system to the main storage unit.

## Claims

1. A computer system, comprising:-
a main storage unit (MS, 2) for storing at least an operating system (OS),
a central processing unit (CPU, 1) for reading instructions of a program stored in said main storage unit (MS, 2) and executing predetermined processings and calculations, and
a service processor (SVP, 3) having connected thereto a plurality of terminals (10, 11, 12, 13) to which respective terminal identifiers, for example terminal numbers, are assigned, operable to use any terminal (10, 11, 12, 13) from among the said plurality of terminals (10, 11, 12, 13) as the service processor terminal or console and to use the remaining terminals (10, 11, 12, 13) for application program processes, for example as work stations, and being connected at least to said main storage unit (MS, 2) and central processing unit (CPU, 1) for loading the said program into the main storage unit (MS, 2).

2. A computer system as claimed in claim 1, further comprising:-
means (311, 312, 313, 314, 315), for example located in the service processor (SVP, 3), for storing, when a request for connection as the service processor terminal is issued from one of said terminals (10, 11, 12, 13), an indication that such request is input, in relation to the terminal concerned,
means (316), for example located in the service processor (SVP, 3), for loading a predetermined program (317, 81, 82) in order to load the operating system (OS, 83)) into said main storage unit (MS, 2), and
means (321) for storing into the predetermined program, after the predetermined program (317, 81, 82) is loaded, the terminal identifier of the terminal (10, 11, 12, 13) which issued the connection request.

3. A computer system as claimed in claim 1 or 2, further comprising:-
a terminal designation program (82) for storing the terminal identifier of the service processor terminal and designating validity designation information (ADRS) relating to said terminal identifier,
means (317, 81) for loading said terminal designation program (82) into said main storage unit (MS, 2),
means (321) , located in the service processor (SVP, 3), for reading said validity designation information (ADRS) in the program after the terminal designation program (82) has been so loaded, and
means (DASD, 8) for storing, into the terminal designation program (82), the terminal identifier of a terminal in respect of which request for connection as the service processor terminal is input, when that request is input whilst said validity designation information (ADRS) is invalid.

4. A computer system according to claim 3, wherein said terminal designation program (82) comprises a structure such that after the terminal identifier is stored in the terminal designation program (82), the operating system (OS, 83) is stored in said main storage unit (MS, 2) by a means (DASD, 8) for storing the terminal identifier of the terminal into said terminal designation program (2).

5. A computer system according to claim 4, further comprising an external storage unit (DASD, 8) storing at least the terminal designation program (82) and operating system (OS, 83).

6. A computer system as claimed in claim 1, comprising:-
means for storing (311, 312, 313, 314), when a request for connection as the service processor terminal is issued from one of said terminals (10, 11, 12, 13), an indication that such said request is input in relation to the terminal concerned, and
means for storing into the operating system (OS, 83), after the operating system has been loaded into the main storage unit (MS, 2), the terminal identifier of the terminal which issued the connection request.

7. A computer system as claimed in claim 6, comprising:-
means, located in the service processor (SVP, 3), for reading validity designation information in the operating system (OS, 83) having the terminal identifier of the service processor terminal and validity designation information relating to the terminal identifier after the operating system (OS, 83) has been loaded into the main storage unit (MS, 2), and
means for storing, into the terminal designation program (82), the terminal identifier of a terminal (10, 11, 12, 13) in respect of which request for connection as service processor terminal is input, whilst validity designation information (ADRS) is invalid.

## Patentansprüche

1. Computer-System, mit:
einer Hauptspeichereinheit (MS, 2) zum Speichern von wenigstens einem Betriebssystem (OS),
einer zentralen Verarbeitungseinheit (CPU, 1) zum Lesen von Befehlen eines Programms, welches in der Hauptspeichereinheit (MS, 2) gespeichert ist, und um vorbestimmte Verarbeitungen und Berechnungen auszuführen, und
einem Service-Prozessor (SVP, 3), an den eine Vielzahl von Terminals (10, 11, 12, 13) angeschlossen sind, denen jeweils Terminal-Identifizierer wie beispielsweise Terminalnummern zugeordnet sind, und der betrieben werden kann, um irgendein Terminal (10, 11, 12, 13) aus der Vielzahl der Terminals (10, 11, 12, 13) als Service-Prozessor-Terminal oder Konsole zu verwenden, und um die restlichen Terminals (10, 11, 12, 13) für Anwendungsprogramm-Verarbeitungsvorgänge, beispielsweise als Arbeitsstationen zu verwenden, und der wenigstens mit der Hauptspeichereinheit (MS, 2) und der zentralen Verarbeitungseinheit (CPU, 1) verbunden ist, um das genannte Programm in die Hauptspeichereinheit (MS, 2) zu laden.

2. Computer-System nach Anspruch 1, welches ferner enthält:
eine Einrichtung (311, 312, 313, 314, 315), die beispielsweise in dem Service-Prozessor (SVP, 3) gelegen ist, um dann, wenn eine Anschluß-Anfrage als Service-Prozessor-Terminal von einem der Terminals (10, 11, 12,13) ausgegeben- wird, eine Anzeige in bezug auf das in Betracht stehende Terminal zu speichern, daß eine Anfrage eingegeben wurde,
eine Einrichtung (316), die beispielsweise in dem Service-Prozessor (SVP, 3) gelegen ist, um ein vorbestimmtes Programm (317, 81, 82) zu laden, um das Betriebssystem (OS, 83) in die Hauptspeichereinheit (MS, 2) zu laden, und
eine Einrichtung (321), um in das vorbestimmte Programm, nachdem das vorbestimmte Programm (317, 81, 82) geladen wurde, den Terminal-Identifizierer des Terminals (10, 11, 12, 13) einzuspeichern, welches die Anschluß-Anfrage ausgegeben hat.

3. Computer-System nach Anspruch 1 oder 2, welches ferner enthält:
ein Terminalbezeichnungs-Programm (82) zum Speichern des Terminal-Identifizierers des Service-Prozessor-Terminals, und um eine Gültigkeits-Bezeichnungsinformation (ADRS) zu speichern, die den genannten Terminal-Identifizierer betrifft,
eine Einrichtung (317, 81) zum Laden des Terminal-Bestimmungsprogramms (82) in die Hauptspeichereinheit (MS, 2),
eine Einrichtung (321), die in dem Service-Prozessor (SVP, 3) gelegen ist, um die Gültigkeits-Bezeichnungs-Information (ADRS) in dem Programm zu lesen, nachdem das Terminal-Bestimmungsprogramm (82) geladen worden ist, und
eine Einrichtung (DAS, 8), um in das Terminal-Bestimmungsprogramm (82) den Terminal-Identifizierer eines Terminals einzuspeichern, in bezug auf den die Anschluß-Anfrage als Service-Prozessor-Terminal eingegeben wurde, wenn diese Anfrage eingegeben wird während die Gültigkeits-Bestimmungsinformation (ADRS) ungültig ist.

4. Computer-System nach Anspruch 3, bei dem das Terminal-Bestimmungsprogramm (82) eine Struktur in solcher Weise aufweist, daß, nachdem der Terminal-Identifizierer in das Terminal-Bestimmungsprogramm (82) eingespeichert wurde, das Betriebssystem (OS, 83) in der Hauptspeichereinheit (MS, 2) abgespeichert wird und zwar mit Hilfe einer Einrichtung (DASD, 8) zum Speichern des Terminal-Identifizierers des Terminals in das Terminal-Bestimmungsprogramm (2).

5. Computer-System nach Anspruch 4, welches ferner eine externe Speichereinheit (DASD, 8) enthält, welche wenigstens das Terminal-Bestimmungsprogramm (82) und das Betriebssystem (OS, 83) speichert.

6. Computer-System nach Anspruch 1, welches umfaßt:
eine Einrichtung (311, 312, 313, 314), um dann, wenn eine Anschluß-Anfrage als Service-Prozessor-Terminal von einem der Terminals (10, 11, 12, 13) ausgegeben wird, eine Anzeige zu speichern, daß eine derartige Anfrage in Verbindung mit dem in Betracht stehenden Terminal eingegeben wurde, und
eine Einrichtung, um in das Betriebssystem (OS, 83), nachdem das Betriebssystem in die Hauptspeichereinheit (MS, 2) geladen wurde, den Terminal-Identifizierer des Terminals einzuspeichern, welches die Anschluß-Anfrage ausgegeben hat.

7. Computer-System nach Anspruch 6, welches enthält:
eine in dem Service-Prozessor (SVP, 3) gelegene Einrichtung, um die Gültigkeits-Bestimmungsinformation in dem Betriebssystem (OS, 83) zu lesen, welche den Terminal-Identifizierer des Service-Prozessor-Terminals enthält, und die Gültigkeits-Bestimmungsinformation zu lesen, die den Terminal-Identifizierer bestrifft, nachdem das Betriebssystem (OS, 83) in die Hauptspeichereinheit (MS, 2) geladen worden ist, und
eine Einrichtung, um in das Terminal-Bestimmungsprogramm (82) den Terminal-Identifizierer eines Terminals (10, 11, 12, 13) einzuspeichern, in Verbindung mit welchem eine Anfrage nach einem Anschluß als Service-Prozessor-Terminal eingegeben wurde während die Gültigkeits-Bestimmungsinformation (ADRS) ungültig ist.

## Revendications

1. Système informatique comprenant :
une unité de mémoire centrale (MS, 2) servant à mémoriser au moins un système d'exploitation (OS),
une unité centrale de traitement (CPU, 1) servant à lire des instructions d'un programme mémorisé dans ladite unité de mémoire centrale (MS, 2) et à exécuter des traitement et des calculs prédéterminés, et
un processeur de services (SVP, 3) auquel sont connectés plusieurs terminaux (10, 11, 12, 13) qui se sont vus affecter des identificateurs de terminaux respectifs, par exemple des numéros de terminaux, qui est en mesure d'utiliser n'importe quel terminal (10, 11, 12, 13) parmi lesdits terminaux (10, 11, 12, 13) comme terminal de processeur de services, ou pupitre de commande, et d'utiliser les terminaux restants (10, 11, 12, 13) pour des traitements de programmes d'application, par exemple comme postes de travail, et qui est connecté au moins à ladite unité de mémoire centrale (MS, 2) et à ladite unité centrale de traitement (CPU, 1) pour charger ledit programme dans ladite unité de mémoire centrale (MS, 2).

2. Système informatique selon la revendication 1, comprenant en outre :
un moyen (311, 312, 313, 314, 315), par exemple logé dans le processeur de services (SVP, 3), afin de mémoriser, lorsqu'une demande de connexion au titre du terminal du processeur de services est délivrée par l'un desdits terminaux (10, 11, 12, 13), une indication qu'une telle demande est fournie en entrée, en liaison avec le terminal considéré,
un moyen (316), par exemple placé dans le processeur de services (SVP, 3), afin de charger un programme prédéterminé (317, 81, 82) pour charger le système d'exploitation (OS, 83) dans ladite unité de mémoire centrale (MS, 2), et
un moyen (321) servant à mémoriser dans ledit programme prédéterminé, après que le programme prédéterminé (317, 81, 82) a été chargé, l'identificateur de terminal du terminal (10, 11, 12, 13) qui a délivré la demande de connexion.

3. Système informatique selon la revendication 1 ou 2, comprenant en outre :
un programme d'indication de terminal (82) servant à mémoriser l'identificateur de terminal du terminal du processeur de services et à indiquer une information d'indication de validité (ADRS) se rapportant audit identificateur de terminal,
un moyen (317, 81) servant à charger ledit programme d'indication de terminal (82) dans ladite unité de mémoire centrale (MS, 2),
un moyen (321), placé dans le processeur de services (SVP, 3), servant à lire ladite information d'indication de validité (ADRS) dans le programme après que le programme d'indication de validité (82) a ainsi été chargé, et
un moyen (DASD, 8) servant à mémoriser, dans le programme d'indication de terminal (82), l'identificateur de terminal d'un terminal relativement auquel une demande de connexion au titre du terminal du processeur de service a été appliquée en entrée, lorsque cette demande est appliquée en entrée tandis que ladite information d'indication de validité (ADRS) est invalide.

4. Système informatique selon la revendication 3 où ledit programme d'indication de terminal (82) comprend une structure telle que, après que l'identificateur de terminal a été mémorisé dans le programme d'indication de terminal (82), le système d'exploitation (OS, 83) est mémorisé dans ladite unité de mémoire centrale (MS, 2) par un moyen (DASD, 8) servant à mémoriser l'indicateur de terminal du terminal dans ledit programme d'indication de terminal (2).

5. Système informatique selon la revendication 4, comprenant en outre une unité de mémoire externe (DASD, 8) mémorisant au moins le programme d'indication de terminal (82) et le système d'exploitation (OS, 83).

6. Système informatique selon la revendication 1, comprenant :
un moyen servant à mémoriser (311, 312, 313, 314), lorsqu'une demande de connexion au titre du terminal du processeur de services est délivré par l'un desdits terminaux (10, 11, 12, 13), une indication que cette dite demande est appliquée en entrée en liaison avec le terminal considéré, et
un moyen servant à mémoriser dans le système d'exploitation (OS, 83), après que le système d'exploitation a été chargé dans l'unité de mémoire centrale (MS, 2), l'identificateur de terminal du terminal qui a délivré la demande de connexion.

7. Système informatique selon la revendication 6, comprenant :
un moyen, placé dans le processeur de services (SVP, 3), afin de lire l'information d'indication de validité dans le système d'exploitation (OS, 83) ayant l'identificateur de terminal du terminal de processeur de services et l'information d'indication de validité se rapportant à l'identificateur de terminal après que le système d'exploitation (OS, 83) a été chargé dans l'unité de mémoire centrale (MS, 2), et
un moyen servant à mémoriser, dans le programme d'indication de terminal (82), l'identificateur de terminal d'un terminal (10, 11, 12, 13) relativement auquel une demande de connexion au titre du terminal du processeur de services a été appliquée en entrée, tandis que l'information d'indication de validité (ADRS) est invalide.
